# EUROPÄISCHE PATENTSCHRIFT

(11) **EP 2 845 917 B1**
(45) Veröffentlichungstag und Bekanntmachung des Hinweises auf die Patenterteilung: **11.04.2018**
(21) Anmeldenummer: 14177695.5
(22) Anmeldetag: 18.07.2014
(51) Int. Cl.: C22C 21/00, C23C 30/00, B32B 15/01

(54) **Gleitlagerverbundwerkstoff, der eine Schicht einer Aluminiumlegierung enthält**
Friction bearing composite material, which comprises a layer of an aluminium alloy
Matériau composite de coussinet, que comprend une couche d'un alliage d'aluminium

(30) Priorität: 10.09.2013 DE 102013218107
(43) Veröffentlichungstag der Anmeldung: 11.03.2015
(73) Patentinhaber: KS Gleitlager GmbH, 68789 St. Leon-Rot (DE)
(72) Erfinder: Bürkle, Gunter, Dr., 71726 Benningen (DE); Schubert, Werner, 69168 Wiesloch (DE); Pucher, Klaus, Dr., 86157 Augsburg (DE)
(74) Vertreter: DREISS Patentanwälte PartG mbB

(56) Entgegenhaltungen:
- WO-A1-2012/110115
- US-A1- 2009 245 702
- US-A1- 2009 246 072
- US-A1- 2012 128 285

## Beschreibung

Die Erfindung betrifft einen metallischen Gleitlagerverbundwerkstoff mit einer Stützschicht, insbesondere aus Stahl, und einer Lagermetallschicht auf Aluminiumbasis mit Zinn, Silizium und Kupfer und/oder Nickel.

Derartige Gleitlagerverbundwerkstoffe sind im Stand der Technik bekannt. Typische Anwendungsgebiete finden sich im Bereich der Kraftfahrzeugtechnik, beispielsweise finden diese Gleitlagerverbundwerkstoffe bei der Herstellung von Kurbelwellenlagerschalen und Pleuellagerschalen Anwendung.

Typische Gleitlagerverbundwerkstoffe weisen eine Stützschicht auf, welche mechanische Stabilität des Gleitlagerverbundwerkstoffs garantiert. Auf dieser Stützschicht ist üblicherweise eine Lagermetallschicht aufgebracht, welche im Allgemeinen eine Dicke von meist über 150 µm aufweist und auf die Stützschicht aufgesintert, aufplattiert oder aufgegossen ist. Auf der Lagermetallschicht ist häufig eine dem Gleitpartner zugewandte Laufschicht angeordnet. Neben diesen Schichten können weitere Schichten, wie beispielsweise Diffusionssperrschichten oder haftvermittelnde Schichten vorgesehen sein.

Der vorliegenden Erfindung liegt die Aufgabe zu Grunde, einen Gleitlagerverbundwerkstoff der vorstehend geschilderten Art zu schaffen, welcher gute Gleiteigenschaften und eine hohe Belastbarkeit aufweist und auf einfache und wirtschaftliche Weise herstellbar ist. Diese Aufgabe wird durch einen Gleitlagerverbundwerkstoff gelöst wie er in Anspruch 1 definiert ist. Bei dem erfindungsgemäßen Gleitlagerverbundwerkstoff wurde überraschenderweise festgestellt, dass die Lagermetallschicht vorteilhafte mechanische sowie tribologische Eigenschaften aufweist, welche durch ihre Legierungszusammensetzung hervorgerufen sind. Die erfindungsgemäße Zulegierung eines oder mehrerer Veredelungsmittel führt im Erstarrungsprozess der Legierung der Lagermetallschicht zu körnigen Silizium-Ausscheidungen in vermehrt sphärischer oder knolliger Form. Sphärische oder knollige Ausscheidungen, das heißt Ausscheidungen mit verrundeter Form sind vorteilhaft gegenüber nadelförmigen oder plattenförmigen oder spratzigen Ausscheidungen, welche durch ihre scharfen Kanten Sollbruchstellen darstellen können.

Die erfindungsgemäße Zulegierung von Kupfer und/oder Nickel bewirkt eine vorteilhafte Festigkeit der Lagermetallschicht.

Die erfindungsgemäße Zulegierung von Legierungskomponenten aus der ersten Gruppe, bestehend aus Cobalt, Cer, Mangan und Molybdän, beeinflusst die Bildung von AlFeSi-Phasen in vorteilhafter Weise. Die Legierungskomponenten der ersten Gruppe bewirken, dass sich die AlFeSi-Phasen im Erstarrungsprozess der Legierung vermehrt sphärisch oder knollig ausbilden.

Die Zulegierung der Legierungskomponenten aus der zweiten Gruppe, bestehend aus Chrom, Vanadium und Zirconium, wirkt sich vorteilhaft auf die Bildung von AlCu-Phasen bzw. AlNi-Phasen aus, derart dass diese Phasen bei erhöhten Temperaturen stabilisiert werden, d.h. sie bleiben auch bei erhöhten Temperaturen erhalten ohne sich wieder aufzulösen.

Die beiden eben genannten Ausscheidungen, nämlich AlFeSi-Phasen sowie der AlCu- bzw. AlNi-Phasen, werden hier als Ausscheidungen intermetallischer Phasen bezeichnet.

Diese positiven Einflüsse der Legierungskomponenten aus der ersten und zweiten Gruppe stellen sich jeweils ein, wenn die Gesamtgehalte der Legierungskomponente der jeweiligen Gruppe den entsprechenden erfindungsgemäßen Mischungsverhältnissen bezogen auf den Gesamtgehalt an Kupfer und/oder Nickel entsprechen.

Der erfindungsgemäße Aspekt, dass die Summe des Siliziumgehalts und des Vierfachen des Gesamtgehalts an Komponenten aus der ersten und der zweiten Gruppe und des Vierfachen des Eisengehalts und des Vierfachen des Gesamtgehalts an Kupfer und/oder Nickel zwischen 5 und 10 Gew.-% beträgt, führt zu vorteilhaften mechanischen Eigenschaften der Lagermetallschicht. Liegt die Summe der Gehalte an den genannten Legierungskomponenten unter 5 Gew.-% so ist die Lagermetallschicht zu weich ausgebildet. Liegt die Summe der Gehalte an den genannten Legierungskomponenten über 10 Gew.-%, so ist die Lagermetallschicht zwar fest ausgebildet, jedoch ist der Werkstoff der Lagermetallschicht zu spröde um zu einem Gleitlagerverbundwerkstoff verarbeitet werden zu können. Vorteilhafterweise kann die Lagermetallschicht und der gesamte Gleitlagerverbundwerkstoff bleifrei ausgebildet werden.

US 2009/0245702 A1 offenbart einige konkrete Ausführungsformen von Gleitlagerverbundwerkstoffen mit einer Lagermetallschicht auf Aluminiumbasis mit Zinn, Silizium und Kupfer. Der Siliziumgehalt dieser konkreten Ausführungsformen liegt unterhalb des beanspruchten Gehalts von 3,5 - 4,5 Gew.-%, und der Kupfergehalt liegt bei der nächstliegenden Ausführungsform oberhalb des beanspruchten Gehalts von 0,5 - 1,0 Gew.-%. Die Verwendung eines Veredelungsmittels der hier beanspruchten Art ist nicht offenbart.

WO 2012/110115 A1 befasst sich mit einer Aluminium-Eisen-Silizium-Gleitlagerlegierung, die aber kupferfrei ist und bei der der Eisengehalt das Zwei - bis Vierfache des Siliziumgehalts beträgt. Diese Druckschrift offenbart die Zugabe von Strontium oder Natrium zur Verbesserung des Ausscheidungsverhaltens und der Ausscheidungsform von Eisensiliziden und Aluminium-Eisen-Verbindungen hinsichtlich Form und Größe.

DE 30 00 772 A1 beansprucht eine AlSn-Lagerlegierung mit 3 bis 7 Gew.% Sn, mit 0,1 bis 1,0 Gew.% Cr; 1 bis 10 Gew.% in Summe eines oder mehrerer Bestandteile der Gruppe Si, Mn, Sb, Ti, Zr, Ni, Fe, W, Ce, Nb, V, Mo, Ba, Ca und Co, mit 0,1 bis 0,8 Gew% in Summe Cu und/oder Mg, und mit Rest Al. Nur ein einziges konkretes Ausführungsbeispiel in Tabelle A Nr.3 enthält Eisen, jedoch kein Kupfer und kein Silizium, und liegt weit außerhalb der weiteren vorstehenden Bemessungsbereiche.

GB 2 067 219 A beansprucht eine AlSn-Lagerlegierung mit 7 bis 35 Gew.% Sn, mit 1 bis 10 Gew.-% in Summe zweier oder mehrerer Bestandteile der Additivgruppe aus Cr, Si, Mn, Sb, Ti, Zr, Ni, Fe, W, Ce, Nb, V, Mo, Ba, Ca und Co, wobei zwingend 1 bis 10 Gew.-% Cr enthalten ist, und mit Rest Al. Kein einziges konkretes Ausführungsbeispiel enthält Eisen. Nur drei Ausführungsbeispiele enthalten Silizium und Kupfer im hier beanspruchten Bereich jedoch viel höhere Zinngehalte.

US 4,340,649 beansprucht eine AlSn-Lagerlegierung mit 7 bis 35 Gew.% Sn, mit 0,1 bis 1 Gew.-% Cr, mit 1 bis 10 Gew.-% in Summe eines oder mehrerer Bestandteile der Additivgruppe aus W, Ce, Nb, V, Mo, Ba, Ca und Co, mit 0 bis 3 Gew.-% Cu und/oder Mg und mit 0 bis 9 Gew.-% in Summe eines oder mehrerer Bestandteile der Additivgruppe aus Pb, Bi, Tl, Cd und In, und mit Rest Al. Nur ein einziges konkretes und zum Stand der Technik gehörendes Beispiel (Tabelle G Nr.21c) enthält Eisen im hier beanspruchten Bereich, jedoch mit höherem Kupfer- und Nickelanteil als hier beansprucht, und liegt weit außerhalb der hier beanspruchten Bemessungsbereiche. Nach einer bevorzugten Ausführungsform der vorliegenden Erfindung ist der Gleitlagerverbundwerkstoff dadurch gekennzeichnet, dass die Lagermetallschicht körnige Silizium-Ausscheidungen und Ausscheidungen intermetallischer Phasen enthält, welche jeweils vorzugsweise überwiegend knollig oder sphärisch ausgebildet sind und jeweils einen D95-Wert ihrer Partikelgröße von weniger als 6 µm aufweisen und einen D99-Wert ihrer Partikelgröße von weniger als 15 µm aufweisen.

Ein Gleitlagerverbundwerkstoff, welcher eine Lagermetallschicht mit den genannten Eigenschaften umfasst, besitzt vorteilhafte mechanische Eigenschaften auf Grund der feinverteilten und knollig oder sphärisch ausgebildeten Silizium-Ausscheidungen und Ausscheidungen von intermetallischen Phasen. Mit überwiegend knollig ist hierbei eine Form gemeint, die keine scharfen Kanten oder platten-oder nadelförmige Auswüchse aufweist. Die Form der Ausscheidungen kann als rund oder abgerundet beschrieben werden.

Unter einem D95-Wert einer Partikelgröße wird hier ein Wert verstanden, der einem Partikeldurchmesser entspricht, bei welchem 95 % der gemessenen Partikeldurchmesser mit ihrer Größe unterhalb dieses Durchmessers, dem D95-Wert liegen. Entsprechend ist ein D99-Wert hier dahingehend definiert, dass 99 % der gemessenen Partikelgrößen unter dem Durchmesser, welcher dem D99-Wert entspricht, liegen.

Partikelgrößen werden hierbei mittels eines Schliffbilds gemessen. Hierbei spielt die Richtung des Schliffbilds, beispielsweise bezogen auf die Maschinenrichtung einer Bandfertigung, keine Rolle, das heißt, dass die Größenverteilung der partikelförmigen Ausscheidungen isotrop ist. Ein solches Schliffbild wird üblicherweise mittels einer mikroskopischen Aufnahme analysiert. In der mikroskopischen Aufnahme werden jeweils Kreise um die zu vermessenden Partikel gelegt, wobei der Kreisdurchmesser so angepasst wird, dass der Kreis der kleinstmögliche Kreis ist, der einen jeweiligen Partikel umschreibt. Der Durchmesser dieses kleinsten einen Partikel umschreibenden Kreises ist der Durchmesser des Partikels, welcher in der Größenverteilung zu berücksichtigen ist. Hierbei wird keine Korrektur dafür vorgenommen, dass ein gewisser Anteil der Partikel außerhalb ihrer maximalen Ausdehnung durch das Schliffbild geschnitten wird.

Nach einer bevorzugten Ausführungsform der Erfindung beträgt der Zinngehalt in der Lagermetallschicht 5,5 - 7 Gew.-%. Der genannte Zinngehalt bewirkt vorteilhafte tribologische Eigenschaften der Lagermetallschicht. Im Betrieb eines Gleitlagers kommt es häufig vor, dass die Laufschicht lokal abgenutzt wird, in einem solchen Fall steht der Gleitpartner in Kontakt mit der Lagermetallschicht. Gute tribologische Eigenschaften der Lagermetallschicht verhindern in einem solchen Fall ein Fressen des Lagers. Ebenso kann, je nach Anwendung, bei guten Gleiteigenschaften der Lagermetallschicht auf eine Laufschicht ganz verzichtet werden oder lediglich eine sich schnell abnutzende, sogenannte Einlaufschicht aufgebracht werden.

Als vorteilhaft hat sich ebenso erwiesen, dass der Siliziumgehalt in der Lagermetallschicht 3,5 - 4,5 Gew.-% beträgt. Hierdurch wird sichergestellt, dass ausreichend Silizium-Ausscheidungen in der Lagermetallschicht vorhanden sind, welche einen vorteilhaften Einfluss auf die mechanischen Eigenschaften der Lagermetallschicht haben.

Kupfer und Nickel, welche sich erfindungsgemäß gegenseitig ersetzen können, haben einen vorteilhaften Einfluss auf die Festigkeit der Lagermetallschicht, wenn sie in den angegebenen Gehaltsbereichen zulegiert werden.

Die Lagermetallschicht kann weiter von einer AlSn(5-12)Si(3,5-4,5)Cu(0,5-1,0)Fe(0,1-0,4)Cr(0,2-0,4)Mn(0,1-0,25)-Legierung, insbesondere von einer AlSn(6)Si(4)Cu(0,7)Fe(0,2)Cr(0,25)Mn(0,15)-Legierung gebildet sein, die außerdem 0,01 bis 0,1 Gew.-% in Summe wenigstens eines Veredelungsmittels aus der Gruppe bestehend aus Strontium, Natrium, Kalium, Kalzium und Barium enthalten, wobei Strontium bevorzugt ist. Diese Legierung eignet sich insbesondere für die Herstellung von Anlaufscheiben, also axial wirkenden Gleitlagerelementen.

Im Sinne der Erfindung ist auch ein Gleitlagerverbundwerkstoff der dadurch gekennzeichnet ist, dass der Gesamtgehalt an Legierungskomponenten aus der ersten Gruppe in der Lagermetallschicht 0,1 - 0,3 Gew.-%, insbesondere 0,1 - 0,2 Gew.-%, beträgt. Die Legierungskomponenten aus der ersten Gruppe haben einen positiven Einfluss auf die Bildung von AlFeSi-Phasen Ausscheidungen, wenn sie in den angegebenen Gesamtgehalten zulegiert werden.

Im Sinne der Erfindung ist auch ein Gleitlagerverbundwerkstoff der dadurch gekennzeichnet ist, dass der Gesamtgehalt an Legierungskomponenten aus der zweiten Gruppe 0,2 - 0,5 Gew.-%, insbesondere 0,25 - 0,35 Gew.-%, beträgt. Die Zulegierung der Legierungskomponenten aus der zweiten Gruppe mit den angegebenen Gesamtgehalten wirkt sich positiv auf die Bildung von feinverteilten überwiegend sphärischen AlCu-Phasen Ausscheidungen aus.

Im Sinne der Erfindung ist ebenso ein Gleitlagerverbundwerkstoff der dadurch gekennzeichnet ist, dass die Summe des Siliziumgehalts und des Vierfachen des Gehalts an Legierungskomponenten aus der ersten und der zweiten Gruppe und des Vierfachen des Eisengehalts und des Vierfachen des Gesamtgehalts an Kupfer und/oder Nickel zwischen 7 und 9,5 Gew.-%, insbesondere zwischen 8 und 9 Gew.-%, beträgt. Eine Zugabe von Silizium in die Legierung der Lagermetallschicht erhöht deren Festigkeit. Ebenso wird durch das Zulegieren der Legierungskomponenten der ersten und der zweiten Gruppe, von Eisen sowie von Kupfer und/oder Nickel die Festigkeit der Lagermetallschicht erhöht, wobei die Zulegierung der eben genannten Elemente sich in etwa viermal so stark auswirkt wie die Zulegierung von Silizium. Erfindungsgemäß hat sich herausgestellt, dass Gesamtgehalte der genannten festigkeitsbeeinflussenden Legierungskomponenten zwischen 7 und 9,5 Gew.-%, insbesondere zwischen 8 und 9 Gew.-%, Festigkeiten der Lagermetallschicht bewirken, die besonders geeignet sind für den Einsatz des Gleitlagerverbundwerkstoffs in der Automobiltechnik.

Im Sinne der Erfindung ist ebenso ein Gleitlagerverbundwerkstoff der dadurch gekennzeichnet ist, dass die Lagermetallschicht direkt auf die Stützschicht, aufplattiert ist oder zwischen Lagermetallschicht und Stützschicht eine Zwischenschicht aus Reinaluminium oder aus einer Aluminiumlegierung angeordnet ist. Ein solcher Aufbau des Gleitlagerverbundwerkstoffs ermöglicht dessen kostengünstige Herstellung.

Im Sinne der Erfindung ist ebenso ein Gleitlagerverbundwerkstoff der dadurch gekennzeichnet ist, dass auf der dem Gleitpartner zugewandten Seite der Lagermetallschicht eine Gleitlackschicht, insbesondere eine polymere Gleitlackschicht, aufgebracht ist. Eine solche erfindungsgemäße Gleitlackschicht weist vorteilhafte tribologische Eigenschaften auf und wirkt sich daher positiv auf die Gleiteigenschaften des erfindungsgemäßen Gleitlagerverbundwerkstoffs aus.

Im Sinne der Erfindung ist ebenso ein Gleitlagerverbundwerkstoff der dadurch gekennzeichnet ist, dass die Gleitlackschicht über eine haftvermittelnde Beschichtung mit der Lagermetallschicht verbunden ist. Eine solche erfindungsgemäße haftvermittelnde Beschichtung zwischen der Gleitlackschicht und der Lagermetallschicht erhöht die Verschleißbeständigkeit des erfindungsgemäßen Gleitlagerverbundwerkstoffs.

Weitere Merkmale, Einzelheiten und Vorteile der Erfindung ergeben sich aus den beigefügten Patentansprüchen, der zeichnerischen Darstellung und nachfolgenden Beschreibung bevorzugter Ausführungsformen des erfindungsgemäßen Gleitlagerverbundwerkstoffs.

In der Zeichnung zeigt
- Figur 1: eine schematische Schnittansicht eines erfindungsgemäßen metallischen Gleitlagerverbundwerkstoffs;
- Figur 2: eine vergrößerte Schnittansicht eines Teils der Lagermetallschicht; und
- Figur 3: eine schematische Schnittansicht einer weiteren Ausführungsform eines erfindungsgemäßen metallischen Gleitlagerverbundwerkstoffs.

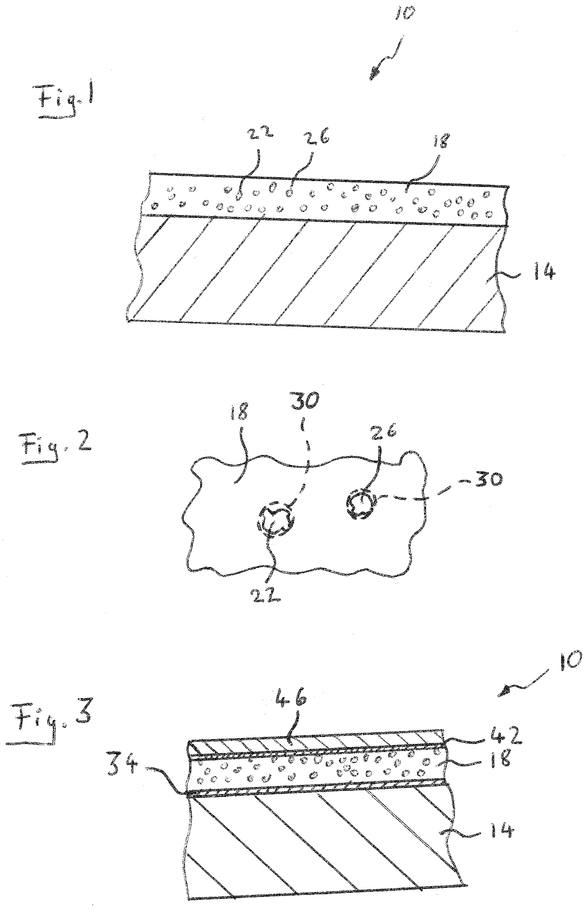

Figur 1 zeigt eine schematische, größenmäßig nicht skalierte Schnittansicht eines erfindungsgemäßen Gleitlagerverbundwerkstoffs 10. Der Gleitlagerverbundwerkstoff umfasst eine Stützschicht 14, welche typischerweise aus Stahl ist. Auf einer einem Gleitpartner zugewandten Seite der Stützschicht 14 ist eine Lagermetallschicht 18 angeordnet. Die Lagermetallschicht 18 umfasst körnige Silizium-Ausscheidungen 22 und Ausscheidungen 26 intermetallischer Phasen.

Figur 2 zeigt eine schematische Darstellung eines vergrößerten Bereichs der Lagermetallschicht 18 aus Figur 1. In Figur 2 sind jeweils eine Silizium Ausscheidung 22 und eine Ausscheidung 26 intermetallischer Phasen zusammen mit ihrer Partikelgröße 30 dargestellt. Die Partikelgröße 30 entspricht dabei dem Durchmesser des kleinstmöglichen Kreises, welcher jeweils um die Silizium Ausscheidung 22 und die Ausscheidung 26 intermetallischer Phasen gelegt werden kann.

Figur 3 zeigt eine schematische, größenmäßig nicht skalierte Schnittansicht einer weiteren Ausführungsform des erfindungsgemäßen Gleitlagerverbundwerkstoffs 10. Zwischen der Stützschicht 14 und der Lagermetallschicht 18 ist in dieser Ausführungsform eine Zwischenschicht 34 aus Reinaluminium angeordnet. Diese Zwischenschicht 34 kann jedoch im Sinne der Erfindung ebenso aus Aluminiumlegierung sein. Erfindungsgemäß ist weiterhin, dass die Lagermetallschicht 18 direkt auf die Stützschicht 14 aus Stahl oder vernickeltem Stahl aufplattiert ist, das heißt, dass die Zwischenschicht 34 im Sinne der Erfindung nicht zwingend ist.

Auf einer dem Gleitpartner zugewandten Seite der Lagermetallschicht 18 ist eine haftvermittelnde Schicht 42 aufgebracht. Diese haftvermittelnde Schicht 42 bewirkt einen besseren Kontakt zwischen der Lagermetallschicht 18 und einer Gleitlackschicht 46. Die Gleitlackschicht 46, welche eine Laufschicht darstellt, kann jedoch im Sinne der Erfindung ebenso direkt auf die Lagermetallschicht 18 aufgebracht werden.

## Patentansprüche

1. Metallischer Gleitlagerverbundwerkstoff (10) mit einer Stützschicht (14), insbesondere aus Stahl, und einer Lagermetallschicht (18) auf Aluminiumbasis mit Zinn, Silizium und Kupfer und/oder Nickel, **dadurch gekennzeichnet, dass** bei der Lagermetallschicht
- der Zinngehalt 5 - 12 Gew.-% beträgt,
- der Siliziumgehalt 3,5 - 4,5 Gew.-% beträgt,
- ein Eisengehalt 0,1 - 0,4 Gew.-% beträgt,
- der Gesamtgehalt an Kupfer und/oder Nickel 0,5 - 1,0 Gew.-% beträgt,
- dass die Lagermetallschicht (18) ein oder mehrere Veredelungsmittel aus der Gruppe, bestehend aus Strontium, Natrium, Kalium, Kalzium und Barium, enthält,
- dass der Gesamtgehalt an Veredelungsmitteln 0,01 - 0,1 Gew.-% beträgt,
- dass die Lagermetallschicht (18) eine oder mehrere Legierungskomponenten aus einer ersten Gruppe, bestehend aus Cobalt, Cer, Mangan und Molybdän, enthält, wobei deren Gesamtgehalt 0,1 - 0,5 Gew.-% beträgt,
- dass die Lagermetallschicht (18) eine oder mehrere Legierungskomponenten aus einer zweiten Gruppe, bestehend aus Chrom, Vanadium und Zirconium, enthält, wobei deren Gesamtgehalt 0,2 bis 0,7 Gew.-% beträgt,
- dass der Rest der Lagermetallschicht (18) Aluminium und unvermeidbare Verunreinigungen sind,
- dass der Gesamtgehalt an Kupfer und/oder Nickel das Vierfache bis Sechsfache des Gesamtgehalts an Komponenten aus der ersten Gruppe beträgt,
- dass der Gesamtgehalt an Kupfer und/oder Nickel das Zweifache bis Vierfache des Gesamtgehalts an Komponenten aus der zweiten Gruppe beträgt, und
- dass die Summe des Siliziumgehalts und des Vierfachen des Gesamtgehalts an Komponenten aus der ersten und der zweiten Gruppe und des Vierfachen des Eisengehalts und des Vierfachen des Gesamtgehalts an Kupfer und/oder Nickel zwischen 5 und 10 Gew.-% beträgt.

2. Gleitlagerverbundwerkstoff (10) nach Anspruch 1, **dadurch gekennzeichnet, dass** die Lagermetallschicht körnige Silizium-Ausscheidungen (22) und Ausscheidungen (26) intermetallischer Phasen enthält, welche jeweils vorzugsweise überwiegend knollig oder sphärisch ausgebildet sind und jeweils einen D95-Wert ihrer Partikelgröße (30) von weniger als 6 µm aufweisen und einen D99-Wert ihrer Partikelgröße (30) von weniger als 15 µm aufweisen.

3. Gleitlagerverbundwerkstoff (10) nach einem der Ansprüche 1 oder 2, **dadurch gekennzeichnet, dass** der Zinngehalt 5,5 - 7 Gew.-% beträgt.

4. Gleitlagerverbundwerkstoff (10) nach einem oder mehreren der vorstehenden Ansprüche, **dadurch gekennzeichnet, dass** die Lagermetallschicht von einer AlSn(5-12)Si(3,5-4,5)Cu(0,5-1,0)Fe(0,1-0,4)Cr(0,2-0,4)Mn(0,1-0,25)-Legierung, insbesondere von einer AlSn(6)Si(4)Cu(0,7)Fe(0,2)Cr(0,25)Mn(0,15)-Legierung gebildet ist, die außerdem wenigstens eines der genannten Veredelungsmittel enthalten.

5. Gleitlagerverbundwerkstoff (10) nach einem oder mehreren der vorstehenden Ansprüche, **dadurch gekennzeichnet, dass** der Gesamtgehalt an Legierungskomponenten aus der ersten Gruppe 0,1 - 0,3 Gew.-%, insbesondere 0,1 - 0,2 Gew.-%, beträgt.

6. Gleitlagerverbundwerkstoff (10) nach einem oder mehreren der vorstehenden Ansprüche, **dadurch gekennzeichnet, dass** der Gesamtgehalt an Legierungskomponenten aus der zweiten Gruppe 0,2 - 0,5 Gew.-%, insbesondere 0,25 - 0,35 Gew.-%, beträgt.

7. Gleitlagerverbundwerkstoff (10) nach einem oder mehreren der vorstehenden Ansprüche, **dadurch gekennzeichnet, dass** die Summe des Siliziumgehalts und des Vierfachen des Gehalts an Legierungskomponenten aus der ersten und der zweiten Gruppe und des Vierfachen des Eisengehalts und des Vierfachen des Gesamtgehalts an Kupfer und/oder Nickel zwischen zwischen 7 und 9,5 Gew.-%, insbesondere zwischen 8 und 9 Gew.-%, beträgt.

8. Gleitlagerverbundwerkstoff (10) nach einem oder mehreren der vorstehenden Ansprüche, **dadurch gekennzeichnet, dass** die Lagermetallschicht (18) direkt auf die Stützschicht (14), aufplattiert ist oder zwischen Lagermetallschicht (18) und Stützschicht (14), eine Zwischenschicht (34) aus Reinaluminium oder aus einer Aluminium Legierung angeordnet ist.

9. Gleitlagerverbundwerkstoff (10) nach einem oder mehreren der vorstehenden Ansprüche, **dadurch gekennzeichnet, dass** auf der einem Gleitpartner zugewandten Seite der Lagermetallschicht (18) eine Gleitlackschicht (46), insbesondere eine polymere Gleitlackschicht (46), aufgebracht ist.

10. Gleitlagerverbundwerkstoff (10) nach Anspruch 9, **dadurch gekennzeichnet, dass** die Gleitlackschicht (46) über eine haftvermittelnde Beschichtung (42) mit der Lagermetallschicht (18) verbunden ist.

## Claims

1. A metal composite friction bearing material (10) having a support layer (14), in particular of steel, and having an aluminum-based bearing metal layer (18) with tin, silicon and copper and/or nickel, **characterized in that** in the bearing metal layer,
- the tin content amounts to 5-12 weight %,
- the silicon content amounts to 3.5-4.5 weight %,
- an iron content amounts to 0.1-0.4 weight %,
- the total content of copper and/or nickel amounts to 0.5-1.0 weight %;
- **in that** the bearing metal layer contains one or more refining agents selected from the group, consisting of strontium, sodium, potassium, calcium and barium,
- **in that** the total content of refining agents amounts to 0.01-0.1 weight %;
- **in that** the bearing metal layer (18) contains one or more alloy components selected from a first group, consisting of cobalt, cerium, manganese and molybdenum, wherein their total content amounts to 0.1-0.5 weight %;
- **in that** the bearing metal layer (18) contains one or more alloy components selected from a second group, consisting of chromium, vanadium and zirconium, wherein their total content amounts to 0.2-0.7 weight %;
- **in that** the remainder of the bearing metal layer (18) is aluminum and unavoidable contaminants;
- **in that** the total content of copper and/or nickel amounts to from four to six times the total content of components from the first group;
- **in that** the total content of copper and/or nickel amounts to from two to four times the total content of components from the second group; and
- **in that** the sum of the silicon content, four times the total content of components from the first and second groups, four times of the iron content, and four times of the total content of copper and/or nickel amounts to between 5 and 10 weight %.

2. The composite friction bearing material (10) of claim 1, **characterized in that** the bearing metal layer contains granular silicon precipitates (22) and precipitates (26) of intermetal phases, which each are embodied preferably predominantly in nodular or spherical form and each have a D95 value of their particle size (30) of less than 6 µm and have a D99 value of their particle size (30) of less than 15 µm.

3. The composite friction bearing material (10) of one of claims 1 or 2, **characterized in that** the tin content amounts to 5.5-7 weight %.

4. The composite friction bearing material (10) of one or more of the foregoing claims, **characterized in that** the bearing metal layer is formed of an AlSn(5-12)Si(3.5-4.5)Cu(0.5-1.0)Fe(0.1-0.4)Cr(0.2-0.4)Mn(0.1-0.25) alloy, in particular an AlSn(6)Si(4)Cu(0.7)Fe(0.2)Cr(0.25)Mn(0.15) alloy, which alloys furthermore contain at least one of said refining agents.

5. The composite friction bearing material (10) of one or more of the foregoing claims, **characterized in that** the total content of alloy components from the first group amounts to 0.1-0.3 weight %, in particular 0.1-0.2 weight %.

6. The composite friction bearing material (10) of one or more of the foregoing claims, **characterized in that** the total content of alloy components from the second group amounts to 0.2-0.5 weight %, in particular 0.25-0.35 weight %.

7. The composite friction bearing material (10) of one or more of the foregoing claims, **characterized in that** the sum of the silicon content and of four times the content of alloy components from the first and the second group and of four times the iron content and of four times the total content of copper and/or nickel amounts to between 7 and 9.5 weight %, in particular between 8 and 9 weight %.

8. The composite friction bearing material (10) of one or more of the foregoing claims, **characterized in that** the bearing metal layer (18) is plated directly onto the support layer (14) or an intermediate layer (34) of pure aluminum or of an aluminum alloy is located between bearing metal layer (18) and support layer (14).

9. The composite friction bearing material (10) of one or more of the foregoing claims, **characterized in that** an anti-friction coating (46), in particular a polymer anti-friction coating (46), is applied to the side of the bearing metal layer (18) that is oriented toward a friction partner.

10. The composite friction bearing material (10) of claim 9, **characterized in that** the anti-friction coating (46) is bonded to the bearing metal layer (18) via an adhesion-promoting coating (42).

## Revendications

1. Matériau composite métallique pour palier de glissement (10) comprenant une couche de support (14), en particulier en acier, et une couche en métal antifriction (18) à base d'aluminium avec de l'étain, du silicium et du cuivre et/ou du nickel, **caractérisé par le fait que** dans ladite couche en métal antifriction
- la teneur en étain est comprise entre 5 et 12 % en poids,
- la teneur en silicium est comprise entre 3,5 et 4,5 % en poids,
- une teneur en fer est comprise entre 0,1 et 0,4 % en poids,
- la teneur totale en cuivre et/ou en nickel est comprise entre 0,5 et 1,0 % en poids,
- que la couche en métal antifriction (18) contient un ou plusieurs agents de perfectionnement provenant du groupe constitué par le strontium, le sodium, le potassium, le calcium et le baryum,
- que la teneur totale en agents de perfectionnement est comprise entre 0,01 et 0,1 % en poids,
- que la couche en métal antifriction (18) comprend un ou plusieurs composants d'alliage provenant d'un premier groupe constitué par le cobalt, le cérium, le manganèse et le molybdène, leur teneur totale étant comprise entre 0,1 et 0,5 % en poids,
- que la couche en métal antifriction (18) comprend un ou plusieurs composants d'alliage provenant d'un deuxième groupe constitué par le chrome, le vanadium et le zirconium, leur teneur totale étant comprise entre 0,2 et 0,7 % en poids,
- que le reste de la couche en métal antifriction (18) sont de l'aluminium et des impuretés inévitables,
- que la teneur totale en cuivre et/ou en nickel fait entre quatre fois et six fois la teneur totale des composants dudit premier groupe,
- que la teneur totale en cuivre et/ou en nickel fait entre deux fois et quatre fois la teneur totale des composants dudit deuxième groupe, et
- que la somme de la teneur en silicium et de quatre fois la teneur totale des composants des premier et deuxième groupes et de quatre fois la teneur en fer et de quatre fois la teneur totale en cuivre et/ou en nickel est comprise entre 5 et 10 % en poids.

2. Matériau composite pour palier de glissement (10) selon la revendication 1, **caractérisé par le fait que** la couche en métal antifriction comprend des précipités granuleux de silicium (22) et des précipités (26) de phases intermétalliques qui sont réalisés chacun de préférence principalement de façon globulaire ou sphérique et présentent chacun une valeur D95 de leur taille de particule (30) qui est inférieure à 6 µm et une valeur D99 de leur taille de particule (30) qui est inférieure à 15 µm.

3. Matériau composite pour palier de glissement (10) selon l'une quelconque des revendications 1 ou 2, **caractérisé par le fait que** la teneur en étain est comprise entre 5,5 et 7 % en poids.

4. Matériau composite pour palier de glissement (10) selon l'une ou plusieurs des revendications précédentes, **caractérisé par le fait que** la couche en métal antifriction est formée d'un alliage d'AlSn(5-12)Si(3,5-4,5)Cu(0,5-1,0)Fe(0,1-0,4)Cr(0,2-0,4)Mn(0,1-0,25), en particulier d'un alliage d'AlSn(6)Si(4)Cu(0,7)Fe(0,2)Cr(0,25)Mn(0,15) qui contiennent en outre au moins l'un des agents de perfectionnement mentionnés.

5. Matériau composite pour palier de glissement (10) selon l'une ou plusieurs des revendications précédentes, **caractérisé par le fait que** la teneur totale en composants d'alliage du premier groupe est comprise entre 0,1 et 0,3 % en poids, en particulier entre 0,1 et 0,2 % en poids.

6. Matériau composite pour palier de glissement (10) selon l'une ou plusieurs des revendications précédentes, **caractérisé par le fait que** la teneur totale en composants d'alliage du deuxième groupe est comprise entre 0,2 et 0,5 % en poids, en particulier entre 0,25 et 0,35 % en poids.

7. Matériau composite pour palier de glissement (10) selon l'une ou plusieurs des revendications précédentes, **caractérisé par le fait que** la somme de la teneur en silicium et de quatre fois la teneur totale des composants des premier et deuxième groupes et de quatre fois la teneur en fer et de quatre fois la teneur totale en cuivre et/ou en nickel est comprise entre 7 et 9,5 % en poids, en particulier entre 8 et 9 % en poids.

8. Matériau composite pour palier de glissement (10) selon l'une ou plusieurs des revendications précédentes, **caractérisé par le fait que** la couche en métal antifriction (18) est plaquée directement sur la couche de support (14) ou qu'une couche intermédiaire (34) en aluminium pur ou en un alliage d'aluminium est disposée entre la couche en métal antifriction (18) et la couche de support (14).

9. Matériau composite pour palier de glissement (10) selon l'une ou plusieurs des revendications précédentes, **caractérisé par le fait que** sur la face de la couche en métal antifriction (18), qui montre vers un partenaire de glissement, est appliquée une couche de vernis de glissement (46), en particulier une couche de vernis de glissement polymère (46).

10. Matériau composite pour palier de glissement (10) selon la revendication 9, **caractérisé par le fait que** ladite couche de vernis de glissement (46) est reliée à la couche en métal antifriction (18) par l'intermédiaire d'un revêtement promoteur d'adhérence (42).
